# EUROPEAN PATENT SPECIFICATION

(11) **EP 4 428 362 B1**
(45) Date of publication and mention of the grant of the patent: **03.09.2025**
(21) Application number: 23168171.9
(22) Date of filing: 17.04.2023
(51) Int. Cl.: F03D 1/06, F03D 80/30

(54) **WIND TURBINE BLADE INTEGRATING A LIGHTNING PROTECTION SYSTEM**
WINDTURBINENBLATT MIT INTEGRIERTEM BLITZSCHUTZSYSTEM
PALE D'ÉOLIENNE INTÉGRANT UN SYSTÈME DE PROTECTION CONTRE LA FOUDRE

(30) Priority: 08.03.2023 EP 23382218
(43) Date of publication of application: 11.09.2024
(73) Proprietor: Siemens Gamesa Renewable Energy Innovation & Technology S.L., 31621 Sarriguren (Navarra) (ES)
(72) Inventor: March Nomen, Victor, 08194 Les Fonts (ES)
(74) Representative: SGRE-Association

(56) References cited:
- EP-A1- 3 997 331
- EP-B1- 3 997 331
- WO-A1-2020/103991
- US-A1- 2021 404 443
- US-B2- 11 346 328

## Description

### TECHNICAL FIELD

The present invention relates to wind turbine blades integrating a lightning protection system.

An object of the invention is the provision of wind turbine blade integrating a lightning protection system, that reduces manufacturing cost and complexity.

### STATE OF THE ART

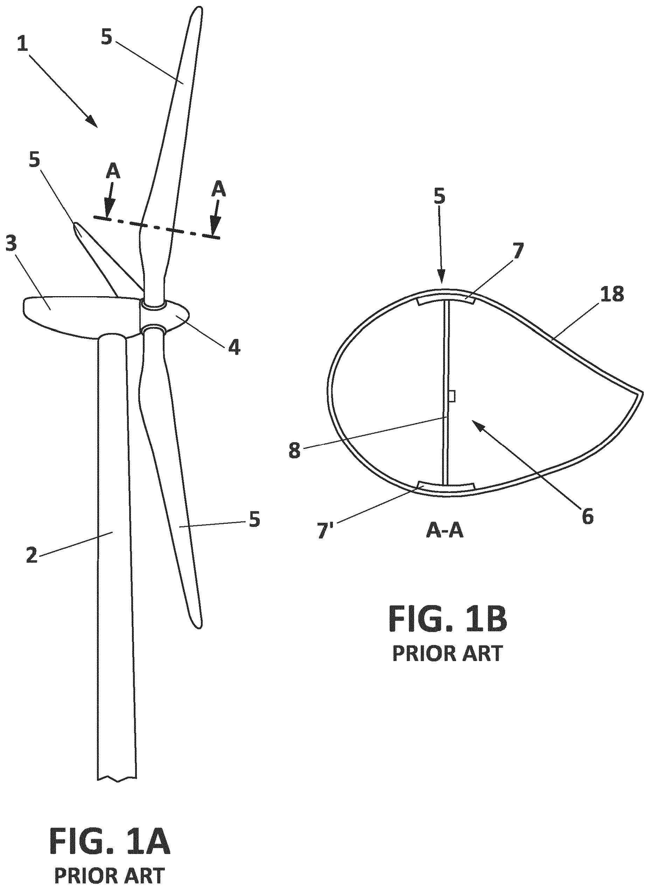

As represented in Figure 1A, typically a wind turbine (1) includes a tower (2), a nacelle (3) supported by the tower (2), a hub (4) installed at the nacelle (3), and several blades (5) attached to the hub (4). In turn, as shown in Figure 1B, each blade (5) is formed by an outer shell (18) and at least one beam (6) formed by a web (8) and two spar caps (7,7') joined to the web's edges, such that the beam (6) is attached internally to the shell (18) by means of the two spar caps (7,7').

Lightning is likely to strike wind turbines blades due to their exposed location and height. As lightning strikes may cause considerable damage to a wind turbine, wind turbines incorporate lightning protection system designed to prevent lightning from damaging the wind turbine blades, bearings and electrical systems of the wind turbine.

Conventionally, lightning protection systems for wind turbine blades include metallic down conductors attached to a beam of the wind turbine blade, and extending longitudinally from the blade's tip to its root at which the wind turbine blade is attached to a hub. By means of additional down-conductors running from the hub via the nacelle and through the tower, lightning currents are conducted to ground.

There are several types of electrical circuits to protect wind turbine blade carbon beams against lightning strikes. For example, the European patent application EP-3943745 A1 describes a carbon pultruded blade carbon beam comprising a stack of carbon pultruded layers having at least a bottom layer and a top layer, each layer having a first end and a second end. The stack defining a tip-region, a root-region, and a mid-region; at least one lightning conductor extending along said stack from the tip-region to the root-region; and a plurality of electrical connections connecting said stack of layers with said lightning conductor, each end of each layer is electrically connected with the lightning conductor by one of said electrical connections; and each electrical connection that connects one of the ends of the top layer with the lightning conductor is electrically connected with the bottom layer.

The general concept of the electrical circuit described in the European patent application EP-3943745 A1 is represented in Figure 2. A carbon spar cap (7) is formed by a plurality of stacked carbon planks or plates (11) having tapered ends, and a down-conductor (9) consisting of a cable running along the spar cap (7) from the root end to the tip end. Electrical connections (10) are provided connecting all the chamfer ends of the carbon planks or plates (11) to the down-conductor (9).

Other type of circuit is described in the PCT patent publication WO 2021/228606 A1. The general concept of the electrical circuit described in the PCT patent application WO 2021/228606 A1, is represented in Figure 3, wherein a lightning strike circuit has two separated down-conductors, a first down-conductor (12) for the tip region of the blade and a second down-conductor (13) for the root region of the blade, so that there is no down-conductor cable running along a large mid region of the carbon spar caps (7), thereby using less material and reducing manufacturing complexity.

US 2021/404443 A1 discloses a wind turbine rotor blade spar cap which includes a stack of layers of conductive material. An intermediate layer is bonded between adjacent layers of the conductive material. The intermediate layer includes a portion of conductive material which is electrically coupled to the adjacent layers of conductive material so as to equipotentially bond the adjacent layers of the conductive material via the intermediate layer.

WO 2020/103991 A1 discloses a wind turbine rotor blade spar cap which the spar cap having a length and comprising: a stack comprising a plurality of layers of conductive material and at least one intermediate layer.

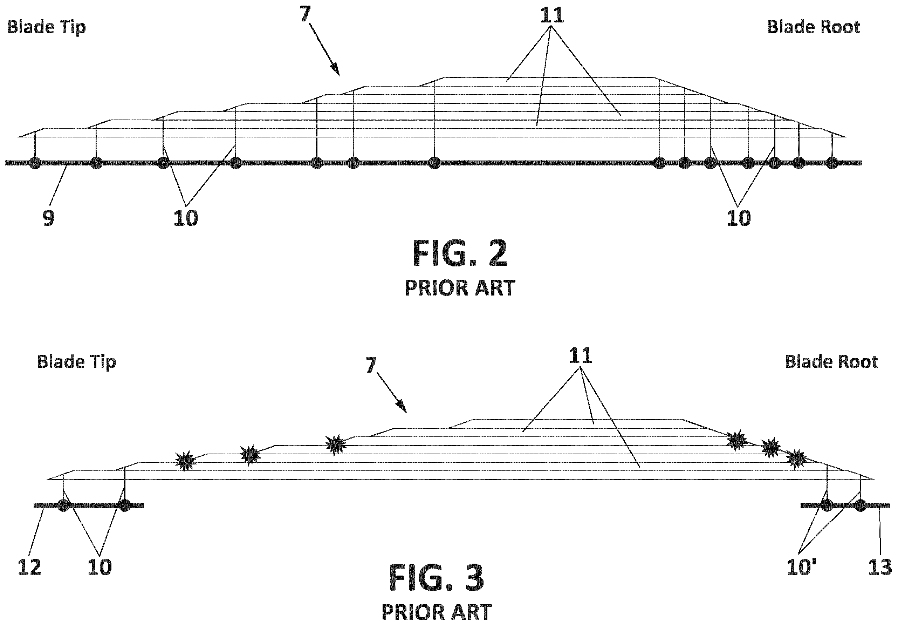

In most of the cases, as shown in Figure 3, the slope of tip region is larger than the slope of the root region, so any electrical connection (10) at tip needs to have a length of about 10-20 meters to reach the 50% of the maximum carbon spar cap cross-section. However, If the electrical connection is just few meters, where the cross-section of the spar cap is below the 50% of the maximum cross-section at the mid-span region of the spar cap, then there is a risk of electric sparks in the rest of the carbon planks at the locations marked in Figure 3, because lightning current would circulate from a carbon plank to adjacent carbons planks through the ends thereof, that might cause delamination of the planks due to electric arcing.

### DESCRIPTION OF THE INVENTION

The invention is defined in the attached independent claims, and satisfactorily solves the above-described drawbacks of the prior art, by the provision of an electric circuit integrated in a wind turbine blade according to claim 1, in particular integrated in at least one spar cap of the blade, for protecting the blade against lightning strikes.

The invention is based on the fact that down-conductors for conducting lightning current, are only needed to some extent at root and tip regions of a carbon spar cap for the conduction of current through those regions, but a down-conductor is not required at a mid-span region of the spar cap, because lightning current can circulate through the carbon spar cap mid-region without down-conductor at that region, that is, the carbon plates at a mid-region can act as down-conductor.

Therefore, elimination of down-conductor at a large mid-region of the carbon spar caps, or in other words reduction of the length of the down-conductors and reduction of the number of electric connections with the carbon plates, reduces manufacturing complexity and reduce production cost of the wind turbine blade, in turn reducing cost of a wind turbine.

More specifically, an aspect of the invention refers to a wind turbine blade integrating a lightning protection system, wherein the wind turbine blade has at least one internal carbon beam to reinforce the blade. Conventionally, the carbon beam is composed by a web and two spar caps which are formed by a plurality of electrically conductive carbon plates or laminates stacked together, such that the stack of carbon plates has a bottom plate, a top plate, and a plurality of intermediate plates stacked in between the bottom and top plates.

Each spar cap is an elongated body extending along an axis (X), and extending between a spar cap's root end and spar cap's tip end, so that the spar cap has a blade tip region, a blade root region and a blade mid region in between the blade tip and root regions.

Each carbon plate has a root end, which is the end closer to the spar cap's root end, and a tip end which is the end closer to the spar cap's tip end. Typically, the carbon plates ends are tapered ends, that is, they have the shape of a chamfer.

According to the invention, the wind turbine blade spar cap further comprises a first down-conductor placed alongside the tip region, and a plurality of electric conductors connecting the first down-conductor to some of the tip ends of the carbon plates, and a second down-conductor placed alongside the root region, and a plurality of electric conductors connecting the second down-conductor to some of the root ends of the carbon plates.

Additionally, the first down-conductor extends from the spar cap's tip end towards the beam's mid region, and terminates at an end of the first down-conductor located adjacent a first region of the spar cap which extends from a cross-sectional area of the spar cap which area is equal or higher than 75% of the maximum cross-sectional area of the spar cap, being that area the one closest to the spar cap's tip end, to a cross-sectional area of the spar cap which area is 100% of the cross-sectional area of the spar cap, being that 100% of the cross-sectional area the one closest to the spar cap's root end.

Furthermore, the second down-conductor extends from the spar cap's root end towards the spar cap's mid region, and terminates at an end of the second down-conductor located adjacent a second region of the spar cap which extends from a cross-sectional area of the spar cap which area is equal or higher than 75% of the maximum cross-sectional area of the spar cap, being that area the one closest to the spar cap's root end, to a cross-sectional area of the spar cap which area is 100% of the cross-sectional area of the spar cap, being that 100% of the cross-sectional area the one closest to the spar cap's tip end.

The invention relies on the fact that, even if carbon fibers of the carbon plates are worst conductors of electrical currents than copper conductors, due to the large cross-sectional area of the beam at a mid-span region thereof, the impedance of that mid region is lower than the one for the down conductor, so that lightning current would flow through the mid region of the spar cap, thus, a down-conductor is not required at that mid-region, which implies that the length of the first and second down-conductors can be reduced.

Additionally, in some practical implementations depending on the number of carbon plates forming each spar cap, the number of electric connections connecting the down-conductor to the carbon plates ends, can also be reduced. Therefore, in a preferred embodiment of the invention, at least the top carbon plate of the stack of plates, is not electrically connected by means of an electric conductor to the first or to the second down conductors, so that a lightning strike current would flow from the first down-conductor to an intermediate carbon plate, and from that intermediate carbon plate to the top carbon plate, and from the top carbon plate to the second down conductor via an intermediate carbon plate.

In an alternative embodiment of the invention, the first down-conductor extends from the spar cap's tip end to a plane orthogonal to the spar cap which passes through the end of the top carbon plate which is closest to the spar cap's tip end. All the carbon plates have their tip end connected to the first down-conductor. The second down-conductor extends from the spar cap's root end to a plane orthogonal to the spar cap which passes through the end of the top carbon plate which is closest to the spar cap's root end. All the carbon plates have their root end connected to the first down conductor.

Preferably, the first and the second down-conductors are generally straight conductors running parallel to the axis (X) along which the spar cap extends.

According to the invention, the wind turbine blade comprises two spar caps, each spar cap constructed as defined in any of the embodiments described above. The wind turbine blade has a lightning receptor at the tip of the beam having two spar caps, and a root terminal at the root end. The two down-conductors of the tip region of the two spar caps are connected at one end to the lightning receptor, and the two down-conductors of the root region of the two spar caps are connected at one end to the root terminal.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows in Figure 1A a perspective view of a conventional wind turbine of the prior art, and in Figure 1B a cross-sectional view of one of the blades.
Figures 2 and 3.- shows two schematic representations of a longitudinal cross-sectional view of a spar cap of a wind turbine blade according to the prior art.
Figures 4 to 7.- show three schematic representations of a longitudinal cross-sectional view of a spar cap of a wind turbine blade according to the invention.
Figure 8.- shows in a schematic representation, a preferred embodiment of the invention including the whole beam having two spar caps, and the complete Lightning Protection System of the invention.
Figures 9 and 10.- shows two electric diagrams representing the electric impedances involved in the electric circuit integrated in a blade according to the invention.
Figures 11 and 12.- shows two graphs representing the linear impedance of the carbon beam material, against blade radius of a beam according to the invention. The blade radius is the distance from the rotating point about which the blade rotates, to a particular point in the blade.
Figures 13 and 14.- shows two exemplary embodiments of the invention including four spar caps.

### PREFERRED EMBODIMENTS OF THE INVENTION

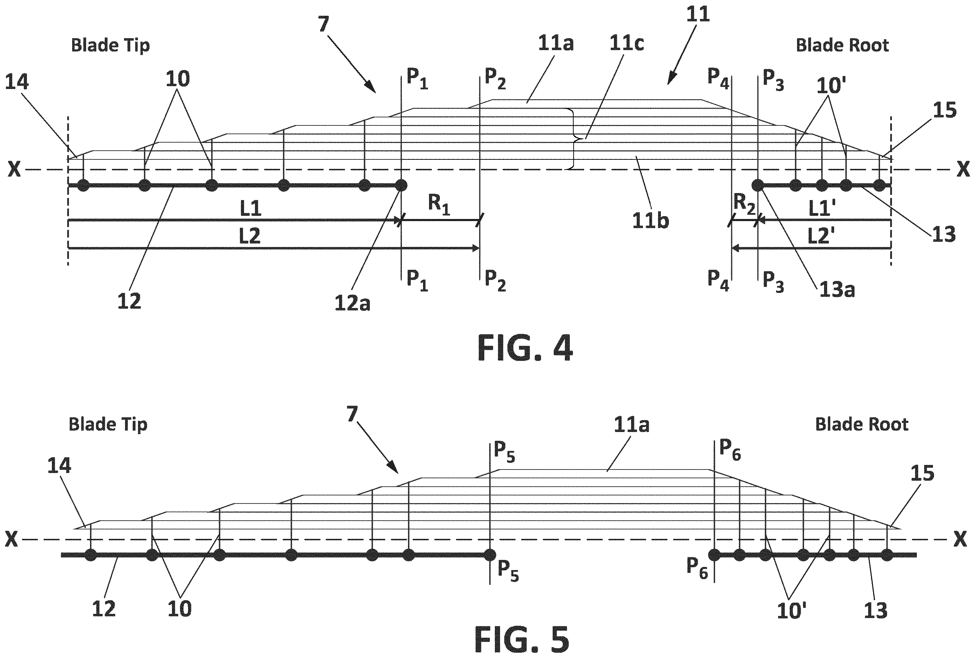

Figure 4 shows a preferred embodiment of the invention, in particular a spar cap (7) of a wind turbine blade, wherein the spar cap (7) conventionally extends from a spar cap's root end (15) to a spar cap's tip end (14), and it is formed by a plurality of carbon plates stacked together, each carbon plate having a tapered root end and a tapered tip end.

The stack (11) of carbon plates has a top plate (11a), a bottom plate (11b) and a plurality of intermediate plates (11c) stacked in between the top and bottom plates (11a,11b).

The spar cap (7) is an elongated body that extends along an axis (X), wherein conventionally a blade tip region, a blade root region and a blade mid region in between the blade tip and root regions, are defined.

Furthermore, the wind turbine blade comprises a first down-conductor (12) placed alongside the tip region of the spar cap, and a first set of electric conductors (10) connecting the first down-conductor (12) to some of the tip ends of the carbon plates (11a,11b,11c), and a second down-conductor (13) placed alongside the root region of the spar cap, and a second set of electric conductors (10') connecting the second down-conductor (13) to some of the roots ends of the carbon plates (11a,11b,11c).

As represented in Figure 4, the first down-conductor (12) extends from the tip end (14) of the spar cap (7) towards the spar cap's mid region, and it has a length which is longer or equal than a length (L1) and which is equal or shorter than a length (L2). The length (L1) starts at the tip end (14) of the spar cap and terminates at a spar cap position or radius where the cross-sectional area in that radius of the spar cap (7) is equal or larger than 75% of the maximum cross-sectional area of the spar cap (7). The length (L2) also starts at the tip end (14) and terminates at a spar cap position or radius where the cross-sectional area is 100% of the maximum cross-sectional area of the spar cap (7) and which is closer to the blade's tip end (14).

Additionally, the second down-conductor (13) extends from the root end (15) of the spar cap towards the spar cap's mid region, and it has as length equal or longer than (L1') and equal or shorter than a length (L2'). The length (L1') starts at the root end (15) and terminates at a carbon spar cap position or radius where the cross-sectional area in that radius of the spar cap is equal or larger than 75% of the maximum cross-sectional area of the spar cap (7). The length (L2') also starts at the root end (15) and terminates at the carbon spar cap position or radius, where the cross-sectional area is 100% of the maximum cross-sectional area of the spar cap, and which is closer to the root end (15).

The first and second down-conductors (12,13) are preferably made of cooper having a 50 mm2 cross-sectional area. With the above-described range of length of the first and second down-conductor (12,13), the electrical impedance of a region of the spar cap for which no down-conductor is provided, must be lower than the impedance of a 50 mm2 copper conductor, which is the impedance of the first and second down-conductors (12,13).

The first and second down-conductors (12,13) are straight conductors that are arranged parallel to the axis (X), and are electrically connected respectively to all or some of the tip ends of the carbon plates (11a,11b,11c) by means of the first set of conductors (10), and to all or some of the root ends of the carbon plates (11a,11b,11c) by means of the second set of conductors (10').

A complementary or alternative definition of the invention, also in view of Figure 4, is that first down-conductor (12) extends from the spar cap's tip end (14) towards the spar cap's mid region, and terminates at a first down-conductor's end (12a) located adjacent or within a first region (R1) of the spar cap (7). This first region (R1) is a region of the spar cap that extends between a first plane (P1) and a second plane (P2), wherein the first plane (P1) is a plane orthogonal to the axis (X) at which the cross-sectional area of the spar cap (7) at this first plane (P1) is equal or higher than 75% of the maximum cross-sectional area of the spar cap and which is the one closest to the spar cap's tip end (14). The second plane (P2) is a plane orthogonal to the axis (X), and at which the cross-sectional area of the spar cap at this second plane (P2) is 100% of the cross-sectional area of the spar cap, and which area is closest to the spar cap's tip end (14).

Similarly, the second down-conductor (13) extends from the spar cap's root end (15) towards the spar cap's mid region, and terminates at a second down-conductor's end (13a) located adjacent or within a second region (R2) of the spar cap (7). This second region (R2) is a region of the spar cap that extends between a third plane (P3) and a fourth plane (P4), wherein the third plane (P3) is orthogonal to the axis (X) at which the cross-sectional area of the spar cap (7) at this third plane (P3) is equal or higher than 75% of the maximum cross-sectional area of the spar cap and which is the one closest to the spar cap's root end (15). The fourth plane (P4) is a plane orthogonal to the axis (X), and at which the cross-sectional area of the par cap at this fourth plane (P4) is 100% of the cross-sectional area of the spar cap and which is the one closest to the spar cap's root end (15).

In the preferred embodiment shown in Figure 5, the first down-conductor (12) extends from the spar cap's tip end (14) to a plane (P5) orthogonal to the spar cap's axis (X), which passes through the end of the top carbon plate (11a) which is closest to the spar cap's tip end (14).

Additionally, the second down-conductor (13) extends from the spar cap's root end (15) to a plane (P6) orthogonal to the spar cap's axis (X), which passes through the end of the top carbon plate (11a) which is closest to the spar cap's root end (15).

In the embodiment of Figure 5, all the carbon plates (11a,11b,11c) have their tip end connected to the first down-conductor (12), and their root end connected to the second down conductor (13), respectively by means of first and second sets (10,10') of electric conductors.

There is no down conductor at a mid-region of the spar cap (7) between planes (P5, P6).

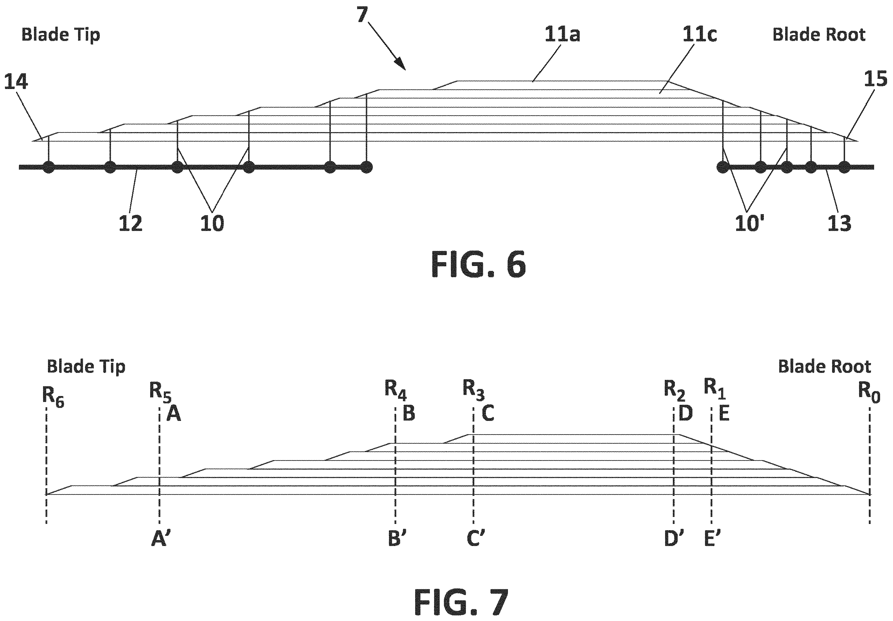

In the alternative embodiment of Figure 6, at least the top carbon plate (11a), and optionally one or more of the intermediate plates (11c), are not connected by means of a conductor to the first or to the second down-conductors (12,13). In this embodiment, the length of the first and the second down-conductors (12,13), comply with the definition given above in relation to Figure 4.

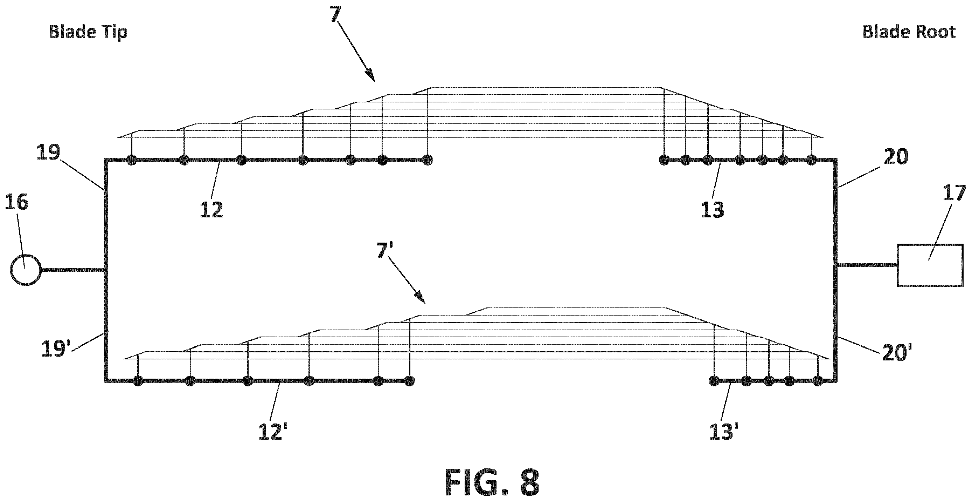

Figure 8 shows the invention applied to a full blade, that is, having one carbon beam comprising a pressure spar cap and a suction spar cap. In this particular embodiment comprising two spar caps, namely a first spar cap (7) and a second spar cap (7'), each spar cap constructed as shown in any of the Figures 4, 5 and 6 and as described above in relation to any of those figures or any combination thereof. In the particular embodiment of Figure 8, the first spar cap (7) is constructed as shown in Figure 5 and as described above in relation to Figure 5, and the second spar cap (7') is constructed as shown in Figure 6 and as described above in relation to Figure 6.

Furthermore, the embodiment of Figure 8 includes a lightning receptor (16) installed nearby the blade tip from the beam tip end, and a root terminal (17) installed nearby the blade root from the beam root end. The two down-conductors (12,12') of the tip region of the spar caps (7,7') are connected at one end to the lightning receptor (16) by means of additional metallic conductors (19,19'), and the two down-conductors (13,13') of the root region of the spar caps (7,7') are connected at one end to the root terminal (17) by means of additional metallic conductors (20,20'), as shown in Figure 8. A lightning strike would penetrate through the lightning receptor (16), and would circulate through the down-conductors, mid region of the spar caps (7,7'), and through the root terminal (17).

Figure 7 in combination with Tables 1 and 2 below, provide some figures on the dimensions in which the cross-sectional area of the spar cap reaches ≥75%, and 100% from the tip and from the root, as defined above.

**Table 1:**

| Radius: | Cross-section respect maximum carbon spar cap cross-section [%] |
|---|---|
| R0 & R6 | 0% |
| R1 | 85% |
| R2 | 100% |
| R3 | 100% |
| R4 | 85% |
| R5 | 28.5% |

**Table 2:**

| Radius: | Length [m] | Percentage of the carbon spar cap length [%] |
|---|---|---|
| R0-R1 | 3-10 | 5-10% |
| R0-R2 | 10-15 | 10-15% |
| R2-R3 | 30-60 | 50-60% |
| R6-R5 | 2-6 | 3-7% |
| R6-R4 | 15-30 | 25-35% |
| R6-R3 | 20-40 | 35-50% |

As an example, and in order to describe the effect of parallel impedances using different materials and cross-sections, it may be supposed that a metallic main down-conductor has a cross-section of 50 mm2, and the carbon plates as described above, specially at tip region have a total cross-section of about 1000 mm2 multiplied by the number of carbon plates. As the resistivities of both materials are approximately: Cu: 1.66E-08 Ohm·m, and Carbon: 2.30E-05 Ohm·m, it leads to a resistance (R) per meter in each case for a 50 mm2 Copper cable and 1000 mm2 carbon plate of about:

| | | |
|---|---|---|
| R | Cu | 0.000333 Ohm/m |
| R | Carbon | 0.02300 Ohm/m |

This means that 69 carbon plates in parallel are needed to get the same voltage drop per meter or the same resistance per meter, than for a copper conductor. The explanation above applies to low frequencies. In high frequencies this ratio is reduced because of skin effect affecting more the metallic conductor because its geometry (smaller cross-section). For first positive short stroke at 25 kHz, this ratio is reduced at around 15, meaning that a cross-section of 15 carbon plates would have same resistance per meter of a 50 mm2 copper cable. This is in agreement with the present invention, as 15 carbon plates are accumulated far from the tip region, so, a down-conductor is needed a certain length from the start of the carbon spar cap at the tip, whereas at the root the increase on number of carbon plates is faster (larger spar cap slope).

In wind turbine blades a copper lightning conductor is always used as main down-conductor. A 50 mm2 cable is commonly used in all blades, either fiberglass or carbon blades. The impedance is an electrical parameter which depends on the frequency. Basically, in lightning frequencies (up to 1 MHz) the impedance is mainly affected by the contribution of the resistance and the self-inductance of the conductors.

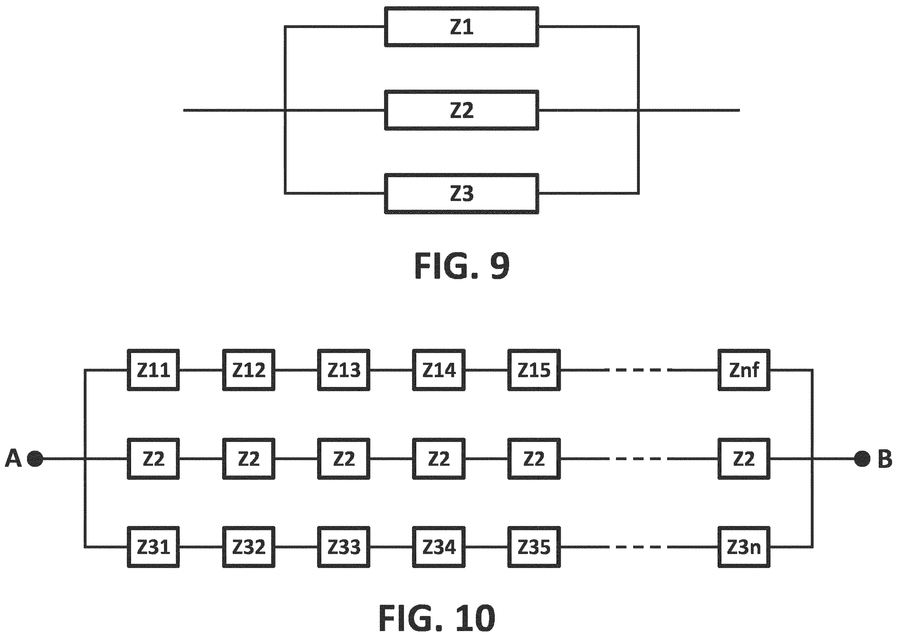

As shown in Figure 9, in a carbon blade with two carbon spar cap, there are in general three impedances in parallel; one of the metallic cable and two of the carbon spar caps (pressure and suction caps), wherein Z1 and Z3 are the impedances of the carbon spar caps, and Z2 is the impedance of the metallic cable which is used as main down-conductor.

These three impedances Z1, Z2 and Z3 may be split into multiple impedances because Z1 and Z3 are not constant along the spar cap axis (X) whereas Z2 is constant (cable cross-section is constant). Therefore, in a general case, the three branches of the circuit of Figure 9 can be discretized as shown in Figure 10.

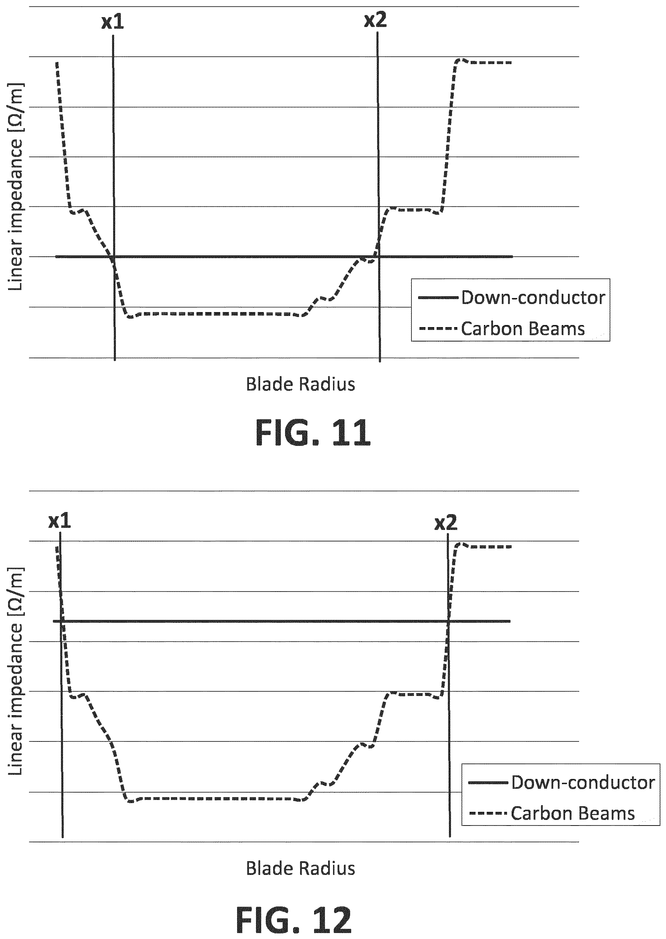

In Figure 10, Z2 is a constant impedance [Ω/m], while the different longitudinal segments of impedances Z1 and Z3 change along the blade. Therefore, in general for standard carbon blades, it leads to the condition shown in Figure 11 of the impedance for a reference frequency of 25 kHz.

In the graph of Figure 11, at blade mid-span regions, as soon as the cross-section of the blade spar caps is increased, the linear impedance of the carbon beam is lower than the one of the down-conductor, which means that most of the lightning current flows through the carbon beam, and the down-conductor may be removed at the mid-span region, in particular at a region between X1 and X2.

The scenario for frequencies higher than 25 kHz is shown in Figure 12.

The graphs of Figures 11 and 12 demonstrate that even as a single conductor carbon fibers are worst conductors of electrical currents than copper conductors, when having much higher cross-sectional area, and taking into account the reduced self-inductance of the spar caps respect to copper cables used in blades, the total linear impedance of the spar caps is lower than the one for the copper cables. It should be emphasized that this is feasible due to the high frequency nature of lightning strikes, and that low frequency lightning events are not compromising the circuit as the values of lightning currents at low frequencies, are much lower than at 25 kHz (values of 2 kA are maximum for low frequencies, which produce a lower voltage drop and Joule heating lower than the maximum 200 kA with 10 MJ/Ω at 25 kHz).

It has been described above that the linear impedance of the carbon spar cap is lower in mid-span regions, so it happens physically when the cross-section of each spar cap is higher than 75% of its maximum cross-section. In this scenario, it may be defined that the metallic cable to inject the lightning current into the carbon spar cap may have a length ≥L1 and ≤L2 being L1 the length in which the carbon spar cap has a cross-section of ≥ 75% of the maximum spar cap cross-section and L1 a value of 100%, or have a length ≥L1' and ≤L2' being L1' the length in which the carbon spar cap has a cross-section of ≥ 75% of the maximum spar cap cross-section and L1' a value of 100%, as defined above in relation to Figure 4.

The embodiment of Figure 4 includes only one main spar cap (7) which may comprise several parallel stacks or just a single stack of carbon plates. However, other embodiments may include a second parallel carbon spar cap with different length and starting and ending radius than the main spar cap. This is for example when using a rear cap, in some blades, in which a shorter cap is needed for structural reasons at the trailing edge of the blade's shell.

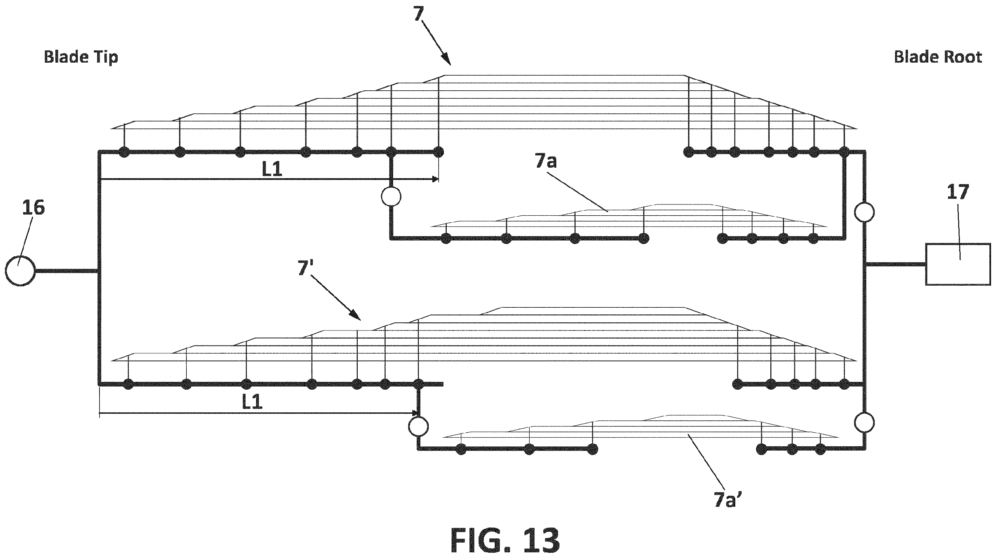

Figure 13 shows an embodiment having two main spar caps (7,7') and two secondary spar caps (7a,7a') shorter than the main spar caps and parallel to them. In this embodiment, the distance between the tip end of a secondary beam (7a,7a') to the tip end of the main beam (7,7') is equal or longer than the distance (L1) defined above in relation with Figure 4.

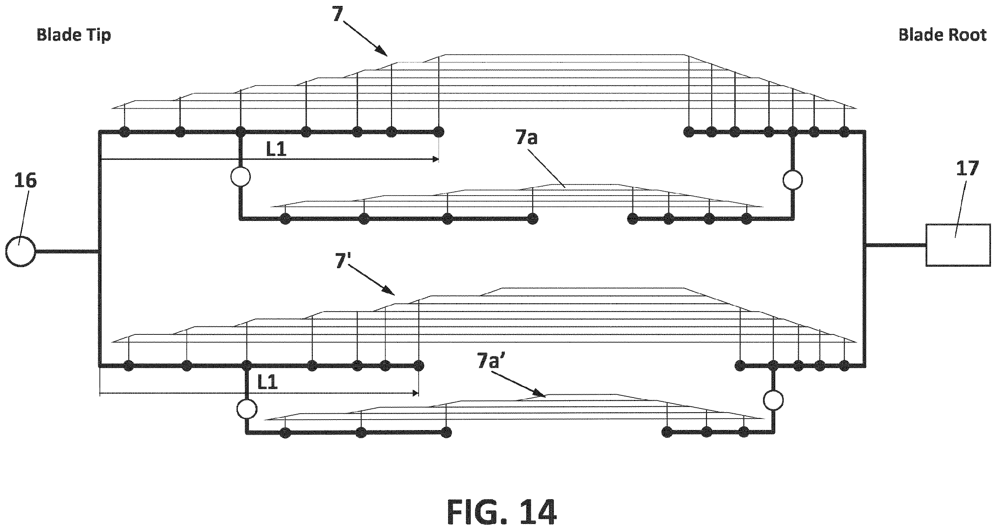

Figure 14 shows another embodiment also having two main spar caps (7,7') and two secondary spar caps (7a,7a') shorter than the main spar caps and parallel to them. In this embodiment, the distance between the root end of the secondary beams (7a,7a') to the root end of the main beam (7,7') is shorter than the distance (L1) defined above in relation with Figure 4.

## Claims

1. A wind turbine blade integrating a lightning protection system,
the wind turbine blade comprising at least one conductive spar cap (7) formed by a stack (11) of carbon plates having a plurality of carbon plates stacked together between a top carbon plate and a bottom carbon plate (11b,11a), and wherein each carbon plate has a root end and a tip end, and
wherein the spar cap (7) is an elongated body extending along an axis (X) from a spar cap's root end (15) to a spar cap's tip end (14), and having a blade tip region, a blade root region and a blade mid region in between the blade tip and root regions,
**characterized in that**,
the wind turbine blade further comprises a first down-conductor (12) placed alongside the tip region of the spar cap (7), and a plurality of electric conductors (10) connecting the first down-conductor (12) to some of the tip ends of the carbon plates, and a second down-conductor (13) placed alongside the root region of the spar cap (7), and a plurality of electric conductors (10') connecting the second down-conductor (13) to some of the root ends of the carbon plates, and
wherein the first down-conductor (12) extends from the spar cap's tip end (14) towards the spar cap's mid region, and terminates at a first down-conductor's end (12a) located adjacent a first region (R1) of the spar cap (7) which extends from a cross-sectional area of the spar cap (7) which area is equal or higher than 75% of the maximum cross-sectional area of the spar cap, being that area the one closest to the spar cap's tip end (14), to a cross-sectional area of the spar cap which area is 100% of the cross-sectional area of the spar cap, being that 100% of the cross-sectional area the one closest to the spar cap's tip end (14);
wherein the blade further comprises a lightning receptor (16) at the tip of the beam, and a root terminal (17) at the root end, and wherein the down-conductors (12,12') of the tip region of the spar caps (7,7') are connected at one end to the lightning receptor (16), and the down-conductors (13,13') of the root region of the spar caps (7,7') are connected at one end to the root terminal (17).

2. A wind turbine blade according to claim 1, wherein the second down-conductor (13) extends from the spar cap's root end (15) towards the spar cap's mid region, and terminates at a second down-conductor's end (13a) located adjacent a second region (R2) of the spar cap which extends from a cross-sectional area of the spar cap (7) which area is equal or higher than 75% of the maximum cross-sectional area of the spar cap, being that area the one closest to the spar cap's root end (15), to a cross-sectional area of the spar cap which area is 100% of the cross-sectional area of the spar cap, being that 100% of the cross-sectional area the one closest to the spar cap's root end (15).

3. A wind turbine blade according to claim 1 or 2, wherein at least the top carbon plate (11a) of the stack (11) of carbon plates, is not electrically connected by means of an electric conductor to the first or to the second down conductors (12,13).

4. A wind turbine blade according to claim 1 or 2, wherein the first down-conductor (12) extends from the spar cap's tip end (14) to a plane (P5) orthogonal to the spar cap (7) which passes through the end of the top carbon plate (11a) which is closest to the spar cap's tip end (14), and wherein there is an electric conductor connecting the top carbon plate's tip end to the first down-conductor (12).

5. A wind turbine blade according to claim 4, wherein the second down-conductor (13) extends from the spar cap's root end (15) to a plane (P6) orthogonal to the spar cap (7) which passes through the end of the top carbon plate (11a) which is closest to the spar cap's root end (15), and wherein there is an electric conductor connecting the top carbon plate's root end to the second down-conductor (13).

6. A wind turbine blade according to claim 4 and 5, wherein all the carbon plates of the stack (11) of carbon plates, have their tip end connected to the first down-conductor (12) and their root end connected to the second down conductor (13).

7. A wind turbine blade according to any of the preceding claims, wherein the spar cap (7) is an elongated body extending along an axis X, and wherein the first and the second down-conductors (12,13), are generally straight conductors running parallel to the axis X.

8. A wind turbine blade comprising two main spar caps (7,7') and two secondary spar caps (7a,7a'), each one of the spar caps (7, 7', 7a,7a') constructed as defined in any of the claims 1 to 7, and wherein the secondary spar caps (7a,7a') are shorter than the main spar caps (7,7') and extend parallel to the main spar caps (7,7'), and wherein the distance between the tip end of a secondary spar caps (7a,7a') to the tip of the a main spar caps (7,7') is equal or longer than a length (L1), wherein the length (L1) starts at the tip end (14) of the main spar cap and terminates at a main spar cap position or radius where the cross-sectional area in that radius of the spar cap (7) is equal or larger than 75% of the maximum cross-sectional area of the spar cap (7).

9. A wind turbine blade comprising two main spar caps (7,7') and two secondary spar caps (7a,7a'), each one of the spar caps (7, 7', 7a,7a') constructed as defined in any of the claims 1 to 7, and wherein the secondary spar caps (7a,7a') are shorter than the main spar caps (7,7') and extend parallel to the main spar caps (7,7'), and wherein the distance between the tip end of a secondary spar caps (7a,7a') to the tip end of the main spar caps (7,7') is shorter than the a length (L1), wherein the length (L1) starts at the tip end (14) of the main spar cap and terminates at a main spar cap position or radius where the cross-sectional area in that radius of the spar cap (7) is equal or larger than 75% of the maximum cross-sectional area of the spar cap (7).

10. A wind turbine blade according to any of the preceding claims, wherein the first and the second down-conductors (12,13) are made of copper, aluminum, or other conductive material.

11. A wind turbine blade according to claim 10, wherein the cross-sectional area of the first and the second down-conductors (12,13) is between 25 - 50mm2.

## Patentansprüche

1. Windturbinenblatt mit einem integrierten Blitzschutzsystem,
wobei das Windturbinenblatt mindestens einen leitenden Holmgurt (7) umfasst, der durch einen Stapel (11) von Kohlenstoffplatten gebildet ist, der mehrere Kohlenstoffplatten aufweist, die zwischen einer oberen Kohlenstoffplatte und einer unteren Kohlenstoffplatte (11b, 11a) gestapelt sind, und wobei jede Kohlenstoffplatte ein Wurzelende und ein Spitzenende aufweist, und
wobei der Holmgurt (7) ein länglicher Körper ist, der sich entlang einer Achse (X) von einem Wurzelende (15) des Holmgurts zu einem Spitzenende (14) des Holmgurts erstreckt, und einen Blattspitzenbereich, einen Blattwurzelbereich und einen Blattmittelbereich zwischen den Blattspitzen- und dem Blattwurzelbereich aufweist,
**dadurch gekennzeichnet, dass**
das Windturbinenblatt ferner Folgendes umfasst: einen ersten Ableiter (12), der entlang des Spitzenbereichs des Holmgurts (7) positioniert ist, und mehrere elektrische Leiter (10), die den ersten Ableiter (12) mit einigen der Spitzenenden der Kohlenstoffplatten verbinden, und einen zweiten Ableiter (13), der entlang des Wurzelbereichs des Holmgurts (7) positioniert ist, und mehrere elektrische Leiter (10'), die den zweiten Ableiter (13) mit einigen der Wurzelenden der Kohlenstoffplatten verbinden, und
wobei sich der erste Ableiter (12) von dem Spitzenende (14) des Holmgurts zu dem Mittelbereich des Holmgurts erstreckt und an einem Ende (12a) des ersten Ableiters endet, das sich neben einem ersten Bereich (R1) des Holmgurts (7) befindet, der sich von einer Querschnittsfläche des Holmgurts (7), deren Fläche größer oder gleich 75 % der maximalen Querschnittsfläche des Holmgurts ist, wobei diese Fläche diejenige ist, die dem Spitzenende (14) des Holmgurts am nächsten liegt, zu einer Querschnittsfläche des Holmgurts erstreckt, deren Fläche 100 % der Querschnittsfläche des Holmgurts ist, wobei diese Fläche 100 % der Querschnittsfläche ist, die dem Spitzenende (14) des Holmgurts am nächsten liegt;
wobei das Blatt ferner an der Spitze des Trägers einen Blitzrezeptor (16) und an dem Wurzelende einen Wurzel-Anschluss (17) umfasst und wobei die Ableiter (12, 12') des Spitzenbereichs des Holmgurts (7, 7') an einem Ende mit dem Blitzrezeptor (16) verbunden sind und die Ableiter (13, 13') des Wurzelbereichs der Holmgurte (7, 7') mit einem Ende mit dem Wurzelanschluss (17) verbunden sind.

2. Windturbinenblatt nach Anspruch 1, wobei sich der zweite Ableiter (13) von dem Wurzelende (15) des Holmgurts zu dem Mittelbereich des Holmgurts erstreckt und an einem Ende (13a) des zweiten Ableiters endet, das sich neben einem zweiten Bereich (R2) des Holmgurts befindet, der sich von einer Querschnittsfläche des Holmgurts (7), deren Fläche größer oder gleich 75 % der maximalen Querschnittsfläche des Holmgurts ist, wobei diese Fläche diejenige ist, die dem Wurzelende (15) des Holmgurts am nächsten liegt, zu einer Querschnittsfläche des Holmgurts erstreckt, deren Fläche 100 % der Querschnittsfläche des Holmgurts ist, wobei diese Fläche 100 % der Querschnittsfläche ist, die dem Wurzelende (15) des Holmgurts am nächsten liegt.

3. Windturbinenblatt nach Anspruch 1 oder 2, wobei zumindest die obere Kohlenstoffplatte (11a) des Stapels (11) von Kohlenstoffplatten nicht mittels eines elektrischen Leiters mit dem ersten oder zweiten Ableiter (12, 13) elektrisch verbunden ist.

4. Windturbinenblatt nach Anspruch 1 oder 2, wobei sich der erste Ableiter (12) von einem Spitzenende (14) des Holmgurts zu einer Ebene (P5), die orthogonal zu dem Holmgurt (7) ist, erstreckt, die durch das Ende der oberen Kohlenstoffplatte (11a) verläuft, die dem Spitzenende (14) des Holmgurts am nächsten ist, und wobei dort ein elektrischer Leiter ist, der das Spitzenende der oberen Kohlenstoffplatte mit dem ersten Ableiter (12) verbindet.

5. Windturbinenblatt nach Anspruch 4, wobei sich der zweite Ableiter (13) von dem Wurzelende (15) des Holmgurts zu einer Ebene (P6), die orthogonal zu dem Holmgurt (7) ist, erstreckt, die durch das Ende der oberen Kohlenstoffplatte (11a) verläuft, die dem Wurzelende (15) des Holmgurts am nächsten ist, und wobei dort ein elektrischer Leiter ist, der das Wurzelende der oberen Kohlenstoffplatte mit dem zweiten Ableiter (13) verbindet.

6. Windturbinenblatt nach Anspruch 4 und 5, wobei alle Kohlenstoffplatten des Stapels (11) von Kohlenstoffplatten mit ihrem Spitzenende mit dem ersten Ableiter (12) verbunden sind und mit ihren Wurzelende mit dem zweiten Ableiter (13) verbunden sind.

7. Windturbinenblatt nach einem der vorhergehenden Ansprüche, wobei der Holmgurt (7) ein länglicher Körper ist, der sich entlang einer Achse X erstreckt, und wobei der erste und der zweite Ableiter (12, 13) im Wesentlichen gerade Leiter sind, die parallel zu der Achse X verlaufen.

8. Windturbinenblatt, das zwei Haupt-Holmgurte (7, 7') und zwei sekundäre Holmgurte (7a, 7a') umfasst, wobei jeder der Holmgurte (7, 7', 7a, 7a') ein Holmgurt nach einem der Ansprüche 1 bis 7 ist und wobei die sekundären Holmgurte (7a, 7a') kürzer sind als die Haupt-Holmgurte (7, 7') und sich parallel zu den Haupt-Holmgurten (7, 7') erstrecken und wobei die Entfernung zwischen dem Spitzenende eines sekundären Holmgurts (7a, 7a') und der Spitze eines Haupt-Holmgurts (7, 7') größer oder gleich einer Länge (L1) ist, wobei die Länge (L1) an dem Spitzenende (14) des Haupt-Holmgurts beginnt und an einer Position oder einem Radius des Haupt-Holmgurts endet, an dem die Querschnittsfläche in diesem Radius des Haupt-Holmgurts (7) größer oder gleich 75 % der maximalen Querschnittsfläche des Holmgurts (7) ist.

9. Windturbinenblatt, das zwei Haupt-Holmgurte (7, 7') und zwei sekundäre Holmgurte (7a, 7a') umfasst, wobei jeder der Holmgurte (7, 7', 7a, 7a') ein Holmgurt nach einem der Ansprüche 1 bis 7 ist und wobei die sekundären Holmgurte (7a, 7a') kürzer sind als die Haupt-Holmgurte (7, 7') und sich parallel zu den Haupt-Holmgurten (7, 7') erstrecken und wobei die Entfernung zwischen dem Spitzenende eines sekundären Holmgurts (7a, 7a') und der Spitze eines Haupt-Holmgurts (7, 7') kleiner ist als eine Länge (L1), wobei die Länge (L1) an dem Spitzenende (14) des Haupt-Holmgurts beginnt und an einer Position oder einem Radius des Haupt-Holmgurts endet, an dem die Querschnittsfläche in dem Radius des Haupt-Holmgurts (7) größer oder gleich 75 % der maximalen Querschnittsfläche des Holmgurts (7) ist.

10. Windturbinenblatt nach einem der vorhergehenden Ansprüche, wobei der erste und der zweite Ableiter (12, 13) aus Kupfer, Aluminium oder einem anderen leitenden Material hergestellt sind.

11. Windturbinenblatt nach Anspruch 10, wobei die Querschnittsfläche des ersten und des zweiten Ableiters (12, 13) 25-50 mm² beträgt.

## Revendications

1. Pale d'éolienne intégrant un système de protection contre la foudre,
la pale d'éolienne comprenant au moins un capuchon de longeron (7) conducteur formé par un empilement (11) de plaques de carbone ayant une pluralité de plaques de carbone empilées ensemble entre une plaque de carbone supérieure et une plaque de carbone inférieure (11b, 11a), et dans laquelle chaque plaque de carbone présente une extrémité d'emplanture et une extrémité de pointe, et
dans laquelle le capuchon de longeron (7) est un corps allongé s'étendant le long d'un axe (X) depuis une extrémité d'emplanture (15) du capuchon de longeron vers une extrémité de pointe (14) du capuchon de longeron, et ayant une région de pointe de pale, une région d'emplanture de pale et une région médiane de pale entre les régions de pointe de pale et d'emplanture,
**caractérisée en ce que**, la pale d'éolienne comprend en outre un premier conducteur de descente (12) placé le long de la région de pointe du capuchon de longeron (7), et une pluralité de conducteurs électriques (10) connectant le premier conducteur de descente (12) vers certaines des extrémités de pointe des plaques de carbone, et un deuxième conducteur de descente (13) placé le long de la région d'emplanture du capuchon de longeron (7), et une pluralité de conducteurs électriques (10') connectant le deuxième conducteur de descente (13) vers certaines des extrémités d'emplanture des plaques de carbone, et dans laquelle le premier conducteur de descente (12) s'étend depuis l'extrémité de pointe (14) du capuchon de longeron vers la région médiane du capuchon de longeron, et se termine au niveau d'une première extrémité (12a) du conducteur de descente localisée adjacente à une première région (R1) du capuchon de longeron (7) qui s'étend depuis une zone transversale du capuchon de longeron (7) laquelle zone est supérieure ou égale à 75 % de la zone transversale maximale du capuchon de longeron, cette zone étant la plus proche de l'extrémité de pointe (14) du capuchon de longeron, vers une zone transversale du capuchon de longeron laquelle zone représente 100 % de la zone transversale du capuchon de longeron, ce 100 % de la zone transversale étant celle la plus proche de l'extrémité de pointe (14) du capuchon de longeron ;
dans laquelle la pale comprend en outre un récepteur de foudre (16) à la pointe du montant, et une terminaison d'emplanture (17) au niveau de l'extrémité d'emplanture, et dans laquelle les conducteurs de descente (12, 12') de la région de pointe des capuchons de longerons (7, 7') sont connectés à une extrémité au récepteur de foudre (16), et les conducteurs de descente (13, 13') de la région d'emplanture des capuchons de longerons (7, 7') sont connectés à une extrémité de la terminaison d'emplanture (17).

2. Pale d'éolienne selon la revendication 1, dans laquelle le deuxième conducteur de descente (13) s'étend depuis l'extrémité d'emplanture (15) du capuchon de longeron vers la région médiane du capuchon de longeron, et se termine au niveau d'une extrémité (13a) du deuxième conducteur de descente localisée adjacente à une deuxième région (R2) du capuchon de longeron qui s'étend depuis une zone transversale du capuchon de longeron (7) laquelle zone est supérieure ou égale à 75 % de la zone transversale maximale du capuchon de longeron, cette zone étant la plus proche de l'extrémité d'emplanture (15) du capuchon de longeron, vers une zone transversale du capuchon de longeron laquelle zone représente 100 % de la zone transversale du capuchon de longeron, ce 100 % de la zone transversale étant celle la plus proche de l'extrémité d'emplanture (15) du capuchon de longeron.

3. Pale d'éolienne selon la revendication 1 ou 2, dans laquelle au moins la plaque de carbone supérieure (11a) de l'empilement (11) des plaques de carbone, n'est pas électriquement connectée à l'aide d'un conducteur électrique au premier ou au deuxième conducteur de descente (12, 13).

4. Pale d'éolienne selon la revendication 1 ou 2, dans laquelle le premier conducteur de descente (12) s'étend depuis l'extrémité de pointe (14) du capuchon de longeron vers un plan (P5) orthogonal au capuchon de longeron (7) qui passe à travers l'extrémité de la plaque de carbone supérieure (11a) qui est la plus proche de l'extrémité de pointe (14) du capuchon de longeron, et dans laquelle il existe un conducteur électrique connectant l'extrémité de pointe de la plaque de carbone supérieure au premier conducteur de descente (12).

5. Pale d'éolienne selon la revendication 4, dans laquelle le deuxième conducteur de descente (13) s'étend depuis l'extrémité d'emplanture (15) du capuchon de longeron vers un plan (P6) orthogonal au capuchon de longeron (7) qui passe à travers l'extrémité de la plaque de carbone supérieure (11a) qui est la plus proche de l'extrémité d'emplanture (15) du capuchon de longeron, et dans laquelle il existe un conducteur électrique connectant l'extrémité d'emplanture de la plaque de carbone supérieure au deuxième conducteur de descente (13).

6. Pale d'éolienne selon la revendication 4 et 5, dans laquelle toutes les plaques de carbone de l'empilement (11) de plaques de carbone, ont leur extrémité de pointe connectée au premier conducteur de descente (12) et leur extrémité d'emplanture connectée au deuxième conducteur de descente (13).

7. Pale d'éolienne selon l'une quelconque des revendications précédentes, dans laquelle le capuchon de longeron (7) est un corps allongé s'étendant le long d'un axe X, et dans laquelle le premier et le deuxième conducteur de descente (12, 13), sont des conducteurs généralement droits s'étendant parallèles à l'axe X.

8. Pale d'éolienne comprenant deux capuchons de longerons (7, 7') principaux et deux capuchons de longerons (7a, 7a') secondaires, chacun des capuchons de longerons (7, 7', 7a, 7a') construit tel que défini selon l'une quelconque des revendications 1 à 7, et dans laquelle les capuchons de longerons (7a, 7a') secondaires sont plus courts que les capuchons de longerons (7, 7') principaux et s'étendent parallèles aux capuchons de longerons (7, 7') principaux, et dans laquelle la distance entre l'extrémité de pointe d'un capuchon de longeron (7a, 7a') secondaire vers la pointe d'un capuchon de longeron (7, 7') principal est égale ou plus longue qu'une longueur (L1), dans laquelle la longueur (L1) commence à l'extrémité de pointe (14) du capuchon de longeron principal et se termine au niveau d'une position ou d'un rayon de capuchon de longeron principal où la zone transversale dans ce rayon du capuchon de longeron (7) est supérieure ou égale à 75 % de la zone transversale maximale du capuchon de longeron (7).

9. Pale d'éolienne comprenant deux capuchons de longerons (7, 7') principaux et deux capuchons de longerons (7a, 7a') secondaires, chacun des capuchons de longerons (7, 7', 7a, 7a') construit tel que défini selon l'une quelconque des revendications 1 à 7, et dans laquelle les capuchons de longerons (7a, 7a') secondaires sont plus courts que les capuchons de longerons (7, 7') principaux et s'étendent parallèles aux capuchons de longerons (7, 7') principaux, et dans laquelle la distance entre l'extrémité de pointe d'un capuchon de longeron (7a, 7a') secondaire vers l'extrémité de pointe d'un capuchon de longeron (7, 7') principal est plus courte qu'une longueur (L1), dans laquelle la longueur (L1) commence à l'extrémité de pointe (14) du capuchon de longeron principal et se termine au niveau d'une position ou d'un rayon de capuchon de longeron principal où la zone transversale dans ce rayon du capuchon de longeron (7) est supérieure ou égale à 75 % de la zone transversale maximale du capuchon de longeron (7).

10. Pale d'éolienne selon l'une quelconque des revendications précédentes, dans laquelle le premier et le deuxième conducteur de descente (12, 13) sont constitués de cuivre, d'aluminium, ou d'un autre matériau conducteur.

11. Pale d'éolienne selon la revendication 10, dans laquelle la zone transversale du premier et du deuxième conducteur de descente (12, 13) est comprise entre 25 à 50 mm².
